# EUROPEAN PATENT APPLICATION

(11) **EP 4 550 722 A1**
(43) Date of publication of application: **07.05.2025**
(21) Application number: 24204740.5
(22) Date of filing: 04.10.2024
(51) Int. Cl.: H04L 9/40

(54) **NETWORK PACKET FILTERING**

(30) Priority: 06.11.2023 US 202363596503 P; 30.07.2024 US 202418789463
(71) Applicant: INTEL Corporation, Santa Clara, CA 95054 (US)
(72) Inventor: SHRIVASTAVA, Shweta, Bee Cave, TX, 78738 (US); JAIN, Nupur, Saratoga, 95070 (US); BALAKRISHNAN, Arunkumar, Santa Clara, 95051 (US); FINGERHUT, John Andrew, Cary, 27513 (US); PETLA, Neelakanta Venkatesh, Round Rock, TX, 78665 (US); R., Vishalakshi, 577204 Shimoga (IN)
(74) Representative: 2SPL Patentanwälte PartG mbB

(57) **Abstract**

Examples described herein relate to a network interface device comprising: an interface to a port; and circuitry to: perform parallel evaluation of multiple rules for a packet; drop the packet based at least in part on an indication by the parallel evaluation that communication with a target is not permitted; and permit communication of the packet based at least in part on a second indication by the parallel evaluation that communication with the target is permitted. In some examples, the parallel evaluation of multiple rules is to evaluate one or more of: a permitted sender Internet Protocol (IP) address range, a permitted destination IP address range, a permitted packet protocol, or a permitted egress port range.

## Description

### RELATED APPLICATION

This application claims priority from U.S. Provisional Application No. 63/596,503, filed November 6, 2023. The entire content of that application is incorporated by reference in its entirety.

### BACKGROUND

Data centers provide processing and storage resources that can be accessed by applications. For example, automobiles, smart phones, laptops, tablet computers, or internet of things (IoT) devices can leverage data centers to perform data analysis, data storage, or data retrieval. Processing and storage resources are connected together using high speed networking devices such as network interfaces, switches, or routers.

Network policies are utilized to provide security in networks to protect the network from external threats and malicious traffic. As applications move towards public cloud, private cloud, and hybrid cloud deployments, network policies are implemented to provide secure access, firewall, and per-tenant network isolation at edge and core data center.

### BRIEF DESCRIPTION OF THE DRAWINGS

FIG. 1 depicts an example system.
FIG. 2 depicts an example of operations to configure a network interface device to perform parallel application of rules on a packet.
FIG. 3 shows an example of evaluation of a packet in a data plane of a network interface device.
FIG. 4 shows a network policy implementation in packet processing pipeline or circuitry of a network interface device.
FIG. 5 depicts an example bitmap with allow/deny decisions based on the results of parallel lookups.
FIG. 6 shows an example of mapping a policy of rules to packets.
FIG. 7 depicts an example of mapping the policy to rules and rule groups.
FIG. 8 shows an example of actions of a set of one or more actions that can be performed based on a match of range check and IPset bitmaps.
FIG. 9 depicts an example process.
FIG. 10 depicts an example network interface device.
FIGs. 11A-11C depict example switches.
FIG. 12 depicts an example system.

### DETAILED DESCRIPTION

A network interface device can utilize access control lists (ACLs) to control communications to and from processes executed by one or more servers. For example, the network interface device can apply Internet Protocol (IP) ACLs to permit or restrict packets from particular senders to proceed to egress to particular receivers. An IP ACL can be a sequential collection of permit or deny conditions rules that are applied to ingress and/or egress traffic in a sequential manner until a rule matches. Evaluating ACL rules one at a time can be time consuming and increase latency of packet communications as the number of applied rules increase. Various examples provide for parallel evaluation of network policy and firewall ACL rules by match-action operations in the network interface device. The network interface device can include a packet processing circuitry that performs a range checker, which can be used to check for matches of multiple destination port ranges for ingress or egress packets, and longest prefix match (LPM), that is used to check for a match against a source or destination Internet Protocol (IP) address or subnetwork, an exact match to a bit range and a ternary content addressable memory (TCAM) for wildcard matches. A server or host system can offload performance of ACLs to a programmable match-action pipeline. Some examples can reduce latency of processing ACL rules as compared to sequential processing of ACL rules by a host processor-executed software.

In some examples, cloud and edge service providers can offload performance of Kubernetes (K8s) Network Access Control List (NACLs) to network interface devices. Some examples can offload, to programmable packet processing circuitry or other circuitry, decomposing network policies into multiple rules at least for Kubernetes (K8s) pods. Decomposition of network policies can be performed on processors of a network interface device instead of, or in addition to, cores that execute application. Performing decomposition of rules at a network interface device can potentially increase security, and free up server resources (e.g., processor and memory) for use by customers' tenant applications.

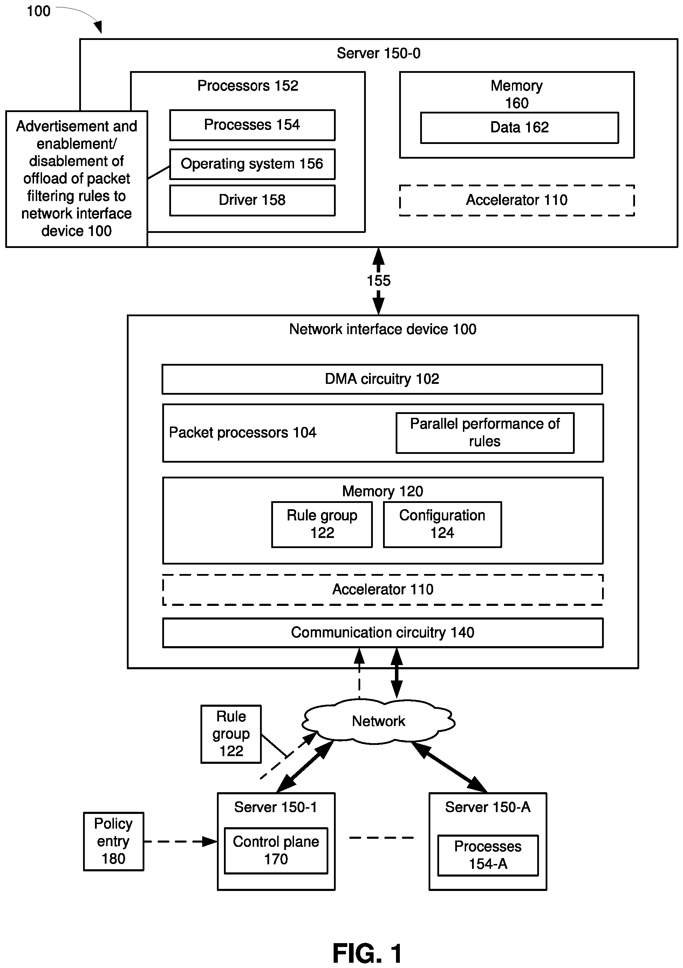

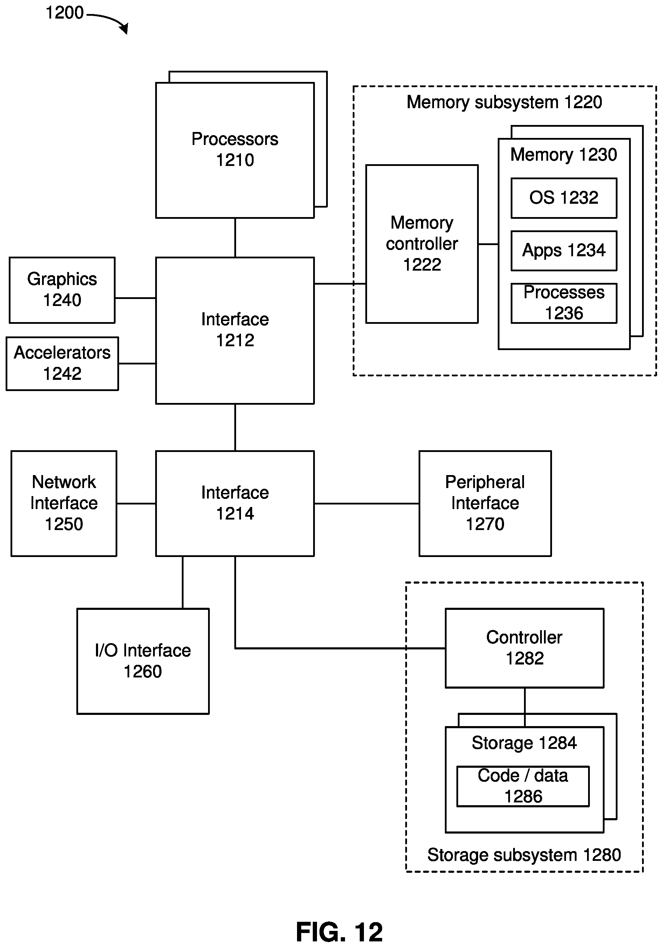

FIG. 1 depicts an example system. One or more of servers 150-0 to 150-A, where A is an integer, can be coupled to network interface device 100 using a device interface 120 (e.g., Peripheral Component Interconnect express (PCIe), Compute Express Link (CXL), or others) or network connection. One or more of servers 150-0 to 150-A can include processors 152, memory 160, and other circuitry and/or software described herein at least with respect to the system of FIG. 12. Processors 152 can include one or more of: a central processing unit (CPU), a processor core, graphics processing unit (GPU), neural processing unit (NPU), general purpose GPU (GPGPU), field programmable gate array (FPGA), application specific integrated circuit (ASIC), tensor processing unit (TPU), matrix math unit (MMU), or other circuitry.

Processors 152 can include a system agent or uncore that can include or more of a memory controller, a shared cache (e.g., last level cache (LLC)), a cache coherency manager, arithmetic logic units, floating point units, core or processor interconnects, Caching/Home Agent (CHA), interface circuitry (e.g., fabric, memory, device), and/or bus or link controllers. System agent can provide one or more of: direct memory access (DMA) engine connection, non-cached coherent master connection, data cache coherency between cores and arbitrates cache requests, or Advanced Microcontroller Bus Architecture (AMBA) capabilities.

Processors 152 can execute processes 154. A process 154 can include one or more of: application, process, thread, a virtual machine (VM), microVM, container, Kubernetes pod, microservice, or other virtualized execution environment. In some examples, processes 154 can perform Kubernetes pods, Docker containers, networking applications, or other processes. Processes 154 can perform packet processing based on one or more of Data Plane Development Kit (DPDK), Storage Performance Development Kit (SPDK), OpenDataPlane, Network Function Virtualization (NFV), software-defined networking (SDN), Evolved Packet Core (EPC), or 5G network slicing. Some example implementations of NFV are described in European Telecommunications Standards Institute (ETSI) specifications or Open Source NFV Management and Orchestration (MANO) from ETSI's Open Source Mano (OSM) group. A virtual network function (VNF) can include a service chain or sequence of virtualized tasks executed on generic configurable hardware such as firewalls, domain name system (DNS), caching or network address translation (NAT) and can run in virtual execution environments. VNFs can be linked together as a service chain. In some examples, EPC is a 3GPP-specified core architecture at least for Long Term Evolution (LTE) access. 5G network slicing can provide for multiplexing of virtualized and independent logical networks on the same physical network infrastructure.

Processors 152 can execute operating system 156 and/or driver 158. Processes 154 can call an application programming interface (API) to communicate with operating system 156 and/or driver 158 to discover capability of network interface device 100 to perform parallel evaluation of matches of a destination port and/or source and protocol combination or destination Internet Protocol (IP) address of a packet against port ranges and/or source or destination IP addresses in multiple rules. Operating system 156 and/or driver 158 can enable or disable packet processors 104 and accelerator 110 of network interface device 100 to perform parallel evaluation of matches of a destination port and/or source or destination Internet Protocol (IP) address of a packet against port ranges and/or source or destination IP addresses in multiple rules.

Processes 154 can access network interface device 100 via interface 155 as one or more virtualized device using virtualization technologies. Various examples of virtualization technologies include Single Root I/O Virtualization (SR-IOV) and Intel^{®} Scalable I/O Virtualization (SIOV). Single Root I/O Virtualization (SR-IOV) and Sharing specification, version 1.1, published January 20, 2010 specifies hardware-assisted performance input/output (I/O) virtualization and sharing of devices. Intel^{®} Scalable I/O Virtualization (SIOV) permits configuration of a device to group its resources into multiple isolated Assignable Device Interfaces (ADIs). Direct Memory Access (DMA) transfers from/to an ADI are tagged with a unique Process Address Space identifier (PASID) number. Unlike the device partitioning approach of SR-IOV to create multiple virtual functions (VFs) on a physical function (PF), SIOV enables software to flexibly compose virtual devices utilizing the hardware-assists for device sharing at finer granularity. An example technical specification for SIOV is Intel^{®} Scalable I/O Virtualization Technical Specification, revision 1.0, June 2018, as well as earlier versions, later versions, and variations thereof.

Packet processing circuitry 104 can process data packets transmitted between processes 154 executed by one or more of servers 150-0 to 150-A. As described herein, packet processing circuitry 104 can perform per-pod ACL rule processing. In some examples, multiple pods can be assigned a same policy or different policies. A data center administrator can enter pod level K8 policies by policy entry 180. Policy entry 180 can occur via a command line interface (CLI) or configuration file. Policies can restrict communications to and from different pods, including pods executing as processes 154. Policies can specify permitted packet egress policies (e.g., protocol, destination port range, destination IP address, or others) and specify permitted packet ingress policies (e.g., protocol, source port range, source IP address, or others). In some examples, control plane 170 executed on server 150-1 can divide a policy into one or more rule groups. A rule group can be characterized by a protocol (e.g., Transmission Control Protocol (TCP), User Datagram Protocol (UDP), quick UDP Internet Connections (QUIC), or others). Within a rule group, control plane 170 can decompose rules into a destination port range check and source or destination IP address or subnet range check (e.g., classless inter-domain routing (CIDR) range check). Control plane 170 can transmit rule group as rule group 122 to network interface device 100 to program packet processors 104 to perform rule group 122.

For example, packet processors 104 of network interface device 100 can perform rules in rule group 122 in parallel. For example, packet processors 104 can perform port range checks in a rule group in parallel. Similarly, packet processors 104 can perform source or destination IP address or subnet range checks in parallel for rules in a rule group.

In some examples, to apply rules 122 that restrict communications among processes, network interface device 100 can perform ACLs as match-action operations based on port range, protocol, and/or an IPSet of destination IP addresses for packet egress, and/or IPSet of source IP addresses for packet ingress to a process of processes 154. An IPSet may include one or more IP addresses, subnet, or classless inter-domain routing (CIDR). Packet processing circuitry 104 of network interface device 100 can perform match-action operations based on one or more of: exact match, longest prefix match (LPM), wild card match (WCM), or others.

In some examples, packet processing circuitry 104 can be configured to perform parallel evaluation of rules for an ingress (received) packet and an egress (transmit) packet. For example, for an egress packet, packet processing circuitry 104 can be configured to perform egress port range checking and next hop determination, in parallel. For example, to perform egress port range checking, packet processing circuitry 104 can perform exact match operations. For example, to perform IP address range checking for an egress packet, packet processing circuitry 104 can perform longest prefix match (LPM) operations to check for a match against a range of one or more destination Internet Protocol (IP) addresses or subnetwork (subnet). For example, to perform IP address range checking for an ingress packet, packet processing circuitry 104 can perform LPM operations to check for a match against a range of one or more source IP addresses or subnet.

In some examples, packet processing circuitry 104 can generate bitmaps for one or more of packet ingress or egress directions to indicate whether rules passed or failed. Bitmaps can indicate what rules were matched. For example, if there is port range match for a particular rule, packet processing circuitry 104 can set a bit in a first bitmap that indicates the particular rule was met for a packet. If there is a subnet match, packet processing circuitry 104 can set a bit in a second bitmap that indicates a particular rule was met by the packet. Packet processing circuitry 104 can compare bitmaps generated from the parallel operations and subnetwork check to determine an action to perform on the packet. For example, the bitmaps can be logical ANDd to together to determine if associated rules match and based on matching of associated rules, packet processing circuitry 104 can access an action to perform on the packet. Based on failure of associated rules to match, packet processing circuitry 104 can drop the packet or trigger an error indication to control plane 170 or a data center administrator.

For example, to access the action to apply to the packet, packet processing circuitry 104 can access a ternary content addressable memory (TCAM) based on a Wild Card Match (WCM). In cases where the packet is a first packet of a flow processed by packet processing circuitry 104, packet processing circuitry 104 can store the action and packet flow information so that a single match-action rule can be performed on other packets of the flow instead of performing parallel rule evaluations for the other packets.

A packet can refer to various formatted collections of bits that may be sent across a network, such as Ethernet frames, Internet Protocol (IP) packets, Transmission Control Protocol (TCP) segments, User Datagram Protocol (UDP) datagrams, Real-time Transport Protocol (RTP) segments, and so forth. A packet can be associated with a flow. A flow can be a sequence of packets being transferred between two endpoints, generally representing a single session using a known protocol. Accordingly, a flow can be identified by a set of defined tuples or header field values and, for routing purpose, a flow is identified by the two tuples that identify the endpoints, e.g., the source and destination addresses. For content-based services (e.g., load balancer, firewall, intrusion detection system, etc.), flows can be differentiated at a finer granularity by using N-tuples (e.g., source address, destination address, IP protocol, transport layer source port, and destination port). A packet in a flow is expected to have the same set of tuples in the packet header. A packet flow can be identified by a combination of tuples (e.g., Ethernet type field, source and/or destination IP address, source and/or destination User Datagram Protocol (UDP) ports, source/destination TCP ports, or any other header field) and a unique source and destination queue pair (QP) number or identifier.

Reference to flows can instead or in addition refer to tunnels (e.g., Multiprotocol Label Switching (MPLS) Label Distribution Protocol (LDP), Segment Routing over IPv6 dataplane (SRv6) source routing, VXLAN tunneled traffic, GENEVE tunneled traffic, virtual local area network (VLAN)-based network slices, technologies described in Mudigonda, Jayaram, et al., "Spain: Cots data-center ethernet for multipathing over arbitrary topologies," NSDI. Vol. 10. 2010 (hereafter "SPAIN"), and so forth.

Based on configuration 124, packet processing circuitry 104 can be configured to perform match-action operations on packets to perform rules 122 and identify next hops for packets. Match-action operations can be based on one or more of: OneAPI, Programming protocol independent packet processors (P4), Software for Open Networking in the Cloud (SONiC), Broadcom^{®} Network Programming Language (NPL), NVIDIA^{®} CUDA9, NVIDIA^{®} DOCA^{™}, Data Plane Development Kit (DPDK), OpenDataPlane (ODP), Infrastructure Programmer Development Kit (IPDK), eBPF, OpenConfig, NETCONF, RESTconf API, x86 compatible executable binaries, or other executable binaries.

Packet processors 104 and/or accelerator 110 can process data to be transmitted to one or more of servers 150-0 to 150-A or received from one or more of servers 150-0 to 150-A by performing one or more of: encryption, decryption, data compression, data decompression, data or device authentication, next hop determination, error value checking (e.g., cyclic redundancy check (CRC) or checksum), trust verification, or others.

In some examples, network interface device 100 can include one or more of: a network interface controller (NIC), a remote direct memory access (RDMA)-enabled NIC, SmartNIC, router, switch, virtual switch, forwarding element, infrastructure processing unit (IPU), data processing unit (DPU), or edge processing unit (EPU). An edge processing unit (EPU) can include a network interface device that utilizes processors and accelerators (e.g., digital signal processors (DSPs), signal processors, or wireless specific accelerators for Virtualized Radio Access Networks (vRANs), cryptographic operations, compression/decompression, and so forth). A virtual switch can provide virtual machine-to-virtual machine communications for virtual machines in a same server or among different servers.

Packet processors 104 and/or accelerator 110 can be implemented as one or more of: a CPU, a processor core, GPU, NPU, GPGPU, FPGA, ASIC, TPU, MMU, match-action circuitry or other circuitry.

Although examples are described with respect to packet processing circuitry 104 perform evaluation of parallel rules on a packet, accelerator 110 can perform the perform evaluation of parallel rules on one or more packets.

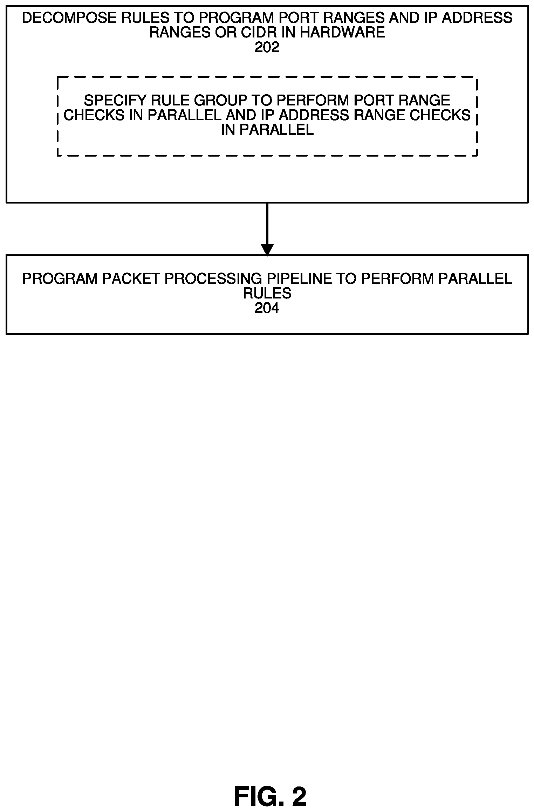

FIG. 2 depicts an example of operations to configure a network interface device to perform parallel application of rules on a packet. At 202, a control plane can monitor for policy update messages from a data center administrator or orchestrator (e.g., Kubernetes orchestrator, container orchestrator, or others). An example control plane includes a Kubernetes compliant control plane, Docker compliant control plane, container networking interface (CNI), or others. The data center administrator or orchestrator can submit at least: (i) a policy updates that define the rules in a policy and (ii) endpoint update requests to inform the list of pods to which the policy needs to be applied. A policy can include defined rule groups. A rule group can include a subset of rules in the policy with the same protocol to match.

At 202, the control plane can generate a rule group for a destination port range check to parallelize operations of the port range check. For example, the control plane can generate multiple parallel rules for an unspecified or wildcard (*) rule by creating rules for a port range with different protocols (e.g., UDP, TCP, QUIC, no protocol). For example, a first rule of the parallel rules can include a check for port range for UDP protocol packets. For example, a second rule of the parallel rules can include a check for port range for TCP protocol packets. Moreover, control plane can generate a rule for next hop determination that can be performed in parallel with port range check.

For example, the control plane can assign to a rule group in the policy, a unique range port range index (range_idx) and IPset index (ipset_idx). Packet processing circuitry can utilize range_idx and ipset_idx as keys in the respective match action tables to match port ranges (e.g., Range Check Table) and IPsets (e.g., Longest Prefix Match Table) belonging to rules for the given rule group. For example, if a port range is not specified in a rule, the control plane can convert the port range into a complete port range match (e.g., 0-65535). If the IPSet is not specified in a rule, the control plane can convert an IP address into a wildcard LPM match (e.g., 0.0.0.0/0 with mask 0).

For a policy that does not specify a protocol and/or port range, the control plane can perform operations (a)-(d) to create rules. At (a), create a rule group with the rules but with no protocol and associate a unique ipset_idx with this rule group. At (b), define an additional table (e.g., exact match table 1) that matches only on pod IP addresses, but not a protocol, and assign the same ipset_idx. At (c), define flags MATCH_IPSET and MATCH_RULE so that matches against the exact match tables cause MATCH_IPSET flag to set to 1 based on the policy having rules with only IPset (e.g., no protocol) (e.g., exact match table 1), or cause MATCH_RULE flag to set to 1 based on the policy having rules with a protocol (and other fields) respectively (e.g., exact match table 2). A Wild Card Match (WCM) table can be configured to match only ipset_check_result, or both range_check_result and ipset_check_result for final allow/deny decision for a packet. At (d), assign priorities to exact match tables such that the actions of exact match table 2 take precedence over match table 1 if both exact match tables match.

At 204, after composing rules of rule groups, the control plane can program a packet processing pipeline of a network interface device with the rules.

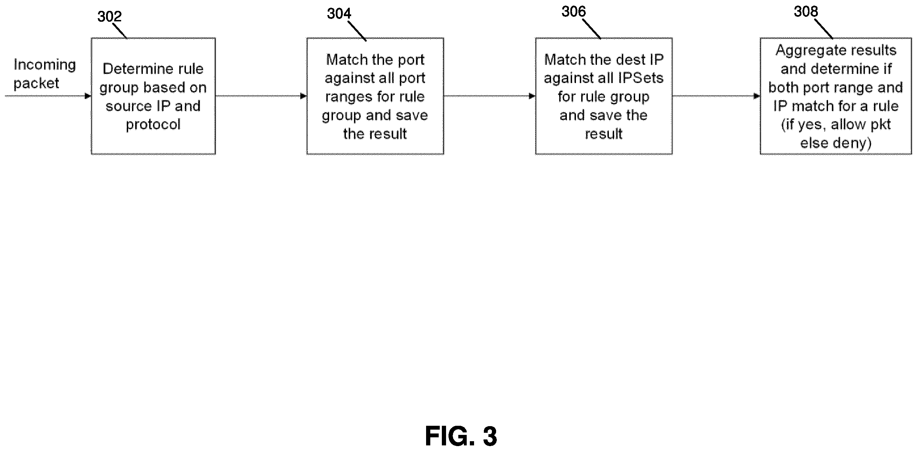

FIG. 3 shows an example of evaluation of a packet in a data plane of a network interface device. The process can be performed by a circuitry in a network interface device or a circuitry accessible to a processor, in some examples. At 302, a rule group to apply to a packet received at the network interface can be determined. At 304, a port range rule check can be applied to the packet. For a match or hit in the lookup of permitted range of one or more egress ports for the packet, the circuitry can set an indicator bit in a first bitmap where a location of the bit in the first bitmap corresponds to a particular rule.

At 306, a destination IP address range rule check can be applied to the packet. For a match or hit in the lookup of permitted range of one or more IP addresses for the packet, the circuitry can set an indicator bit in a second bitmap where a location of the bit in the second bitmap corresponds to a particular rule. For example, a permitted range of one or more destination IP addresses can be used for an egress packet to be transmitted from the network interface device whereas a permitted range of one or more destination IP addresses can be used for a packet to be egressed from the network interface device.

At 308, if both port range and source IP address ranges match, a lookup of an action to perform on the packet can be performed. If ether port range or source IP address do not pass respective range check or IP address check, the packet can be dropped. Other methods may include assigning a first metadata to store a value of a port range check pass or fail and a second metadata to store a value of an IPSet check pass or fail, and exact match lookup to identify whether the first metadata matches the second metadata. Based on the first metadata matching the second metadata, a packet can be determined to pass. Based on the first metadata not matching the second metadata, a packet can be determined to fail.

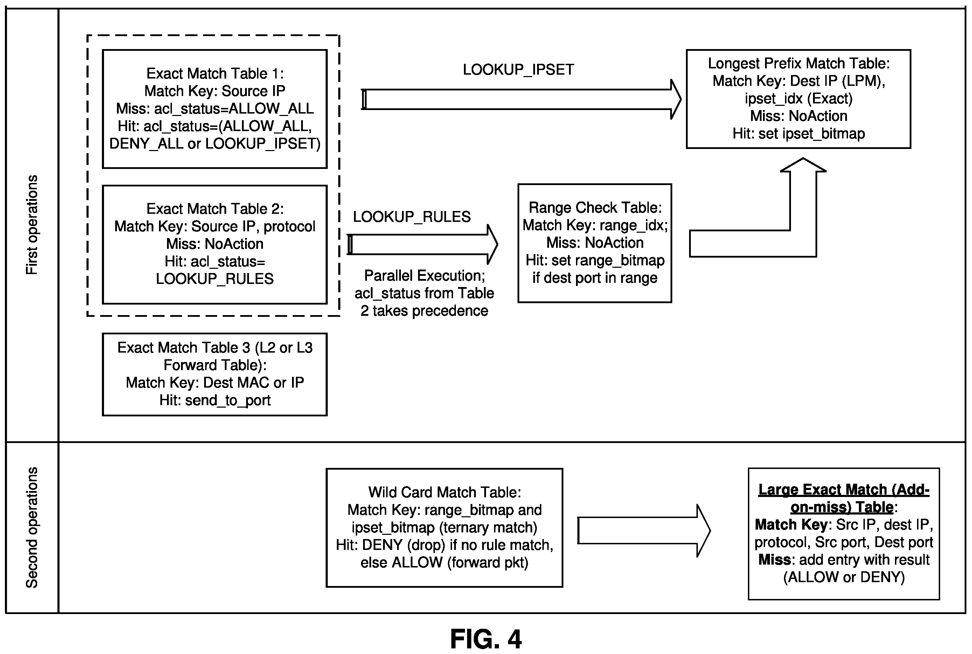

FIG. 4 shows a network policy implementation in packet processing pipeline or circuitry of a network interface device. The packet processing pipeline or circuitry can access a match action table stored in a ternary content addressable memory (TCAM) table to determine an end result based on comparisons of bitmaps. A control plane can configure the packet processing circuitry of the network interface device to perform matches against Exact Match Tables 1-3 in parallel, or at least overlapping in time. For example, the control plane can execute on a server communicatively coupled to the network interface device or can execute on the network interface device.

Control plane can configure Table 1 for the packet processing pipeline or circuitry to determine whether there is a match of a source IP address of a packet to egress against a range of one or more source IP addresses. Based on a match of the source IP address of the packet to egress against the range of one or more source IP addresses, an ACL status for the packet can be set to ALLOW ALL (e.g., allow egress), DENY ALL (e.g., do not allow egress), or perform LOOKUP IPSET. Based on a miss of the source IP address of the packet to egress against the range of one or more source IP addresses, an ACL status for the packet can be set to ALLOW ALL.

Control plane can configure Table 2 for the packet processing pipeline or circuitry to determine whether there is a match of a source IP address of a packet to egress against a range of one or more source IP addresses and any packet protocol of the packet to egress matches against one or more protocols. Based on a match of the source IP address of the packet to egress against the range of one or more source IP addresses and the protocol of the packet to egress matches against one or more protocols, an ACL status for the packet can be set to LOOKUP RULES. Based on a miss of the source IP address of the packet to egress against the range of one or more source IP addresses, an ACL status for the packet can be set to no action, alert an administrator of the miss and that identifies a flow of the packet that triggered the miss, and log an error that identifies a flow of the packet that triggered the miss.

In some examples, control plane can set a priority of Table 2 to be higher than that of Table 1 so that a match to Table 2 preempts a result from Table 1 for the egress packet. A TCAM based longest prefix match (LPM) match can specify rule priorities. In some examples, based on inconsistency of results from lookups from multiple tables, such as where a look up against a first table indicates a packet drop is to take place and lookup against a second table indicates the packet is to proceed, the drop action can be taken. In some examples, where a packet matches with multiple rules and the multiple rules are varying priority levels, despite inconsistencies among the actions stemming from the matched rules, an action associated with a highest priority rule can be performed.

For a match against Table 1 and LOOKUP IPSET is set, the control plane can set a next action as lookup of an IP set, a range of one or more permitted destination IP addresses for the packet. Lookup of an IP set can be based on LPM, in some examples. For a miss against a lookup of Table 1 or a match against a lookup of Table 1 and ALLOW ALL or DENY ALL is set, control plane can cause a next operation to be to bitmap comparisons in second operations.

For a match against Table 2 and LOOKUP RULES is set, control plane can set a next action as lookup of permitted range of one or more egress ports for the packet. For a match or hit in the lookup of permitted range of one or more egress ports for the packet, the circuitry can set an indicator bit in a first bitmap where a location of the bit in the first bitmap corresponds to a particular rule that is applied by Table 2. For a miss against a lookup of Table 2, control plane can cause a next operation to be no action, alert an administrator of the miss and that identifies a flow of the packet that triggered the miss, and log an error that identifies a flow of the packet that triggered the miss.

Control plane can configure Table 3 for the packet processing pipeline or circuitry to determine an egress port for the packet to egress against a range of one or more destination media access control (MAC) addresses and/or destination IP addresses of the packet to egress. Based on a match of the one or more destination MAC addresses and/or destination IP addresses of the packet to egress, an egress port for the packet can be determined and utilized to egress the packet and/or other actions can be performed. For a miss against a lookup of Table 3, control plane can cause a next operation to be no action, alert an administrator of the miss and that identifies a flow of the packet that triggered the miss, and log an error that identifies a flow of the packet that triggered the miss.

Control plane can configure Lookup of IP set for the packet processing pipeline or circuitry to determine whether a destination IP address for the packet is permitted to egress based on a match or hit against a range of one or more destination IP addresses. For a match or hit in the lookup of permitted range of one or more destination IP addresses, the circuitry can set an indicator bit in a second bitmap where a location of the bit in the bitmap corresponds to a particular rule, as described herein. For a miss against the range of one or more destination IP addresses, control plane can cause a next operation to be no action, alert an administrator of the miss and that identifies a flow of the packet that triggered the miss, and log an error that identifies a flow of the packet that triggered the miss.

Control plane can configure second operations for the packet processing pipeline or circuitry to perform a comparison of first and second bitmaps to determine if the values in the bitmaps are the same or different. For example, matching values in first and second bitmaps can indicate that both egress port range check and IP addresses have passed and the packet can be permitted to egress. For example, mismatching values in first and second bitmaps can indicate that either egress port range check or destination IP address check have not passed and the packet can be dropped, alert an administrator of the miss and that identifies a flow of the packet that triggered the drop, and log an error that identifies a flow of the packet that triggered the drop. In some examples, the second operation can occur after the lookup of IP set and may involve recirculating the packet through the packet processing pipeline.

After processing a first packet of a flow, a result of ACL processing can be stored in a match-action table with dynamic entry addition capability (e.g., add-on-miss capability). Subsequent packets in the flow can hit the match-action table, resulting in the stored action (allow or deny) being taken on the subsequent packets to apply pinned rules. Where there is a limited number of match-action stages, recirculating packets through the pipeline can be performed to perform additional match-action operations on the packets.

While examples are described with respect to egress of packets, the examples can apply to ingress packets by performing a range check on source IP addresses in the LPM table.

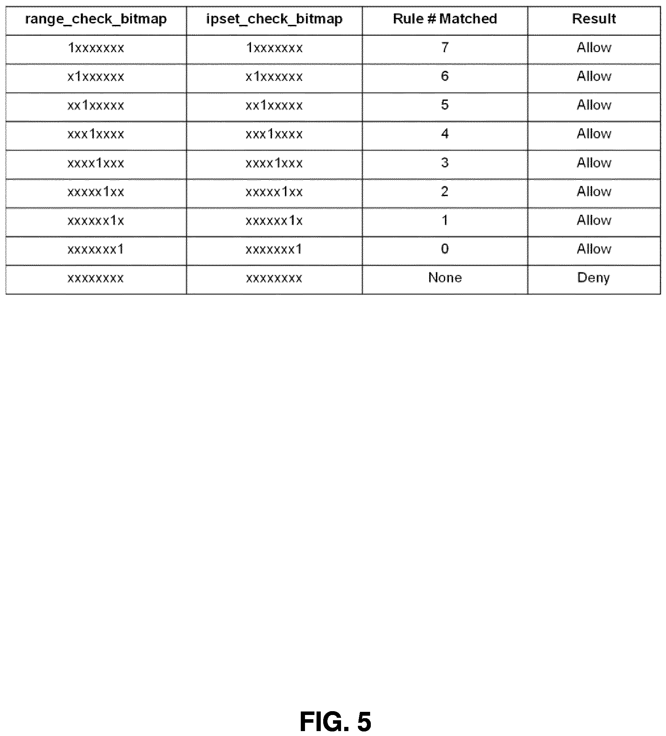

FIG. 5 depicts an example bitmap with allow/deny decisions based on the results of parallel lookups. A control plane can assign a unique index (i) to a rule in a rule group. As described herein, evaluation of multiple port ranges for rules in the rule group can occur for a packet in parallel and a result for rule i can be stored at position i in an n-bit bitmap (range_check_bitmap), where n is the number of rules in the rule group. A value of 1 for the bit indicates the rule matched and a value of 0 indicates the rule did not match. Similarly, the IP addresses or subnets that are part of IPSet for the rule group are evaluated at once, and the result of rule 'i' is stored at position 'i' in another n-bit bitmap (ipset_match_bitmap). The packet processing circuitry can allow a packet to ingress or egress when the same bit positions match in both the bitmaps. The packet processing circuitry can deny the packet from ingressing or egressing when the same bit positions match in both the bitmaps.

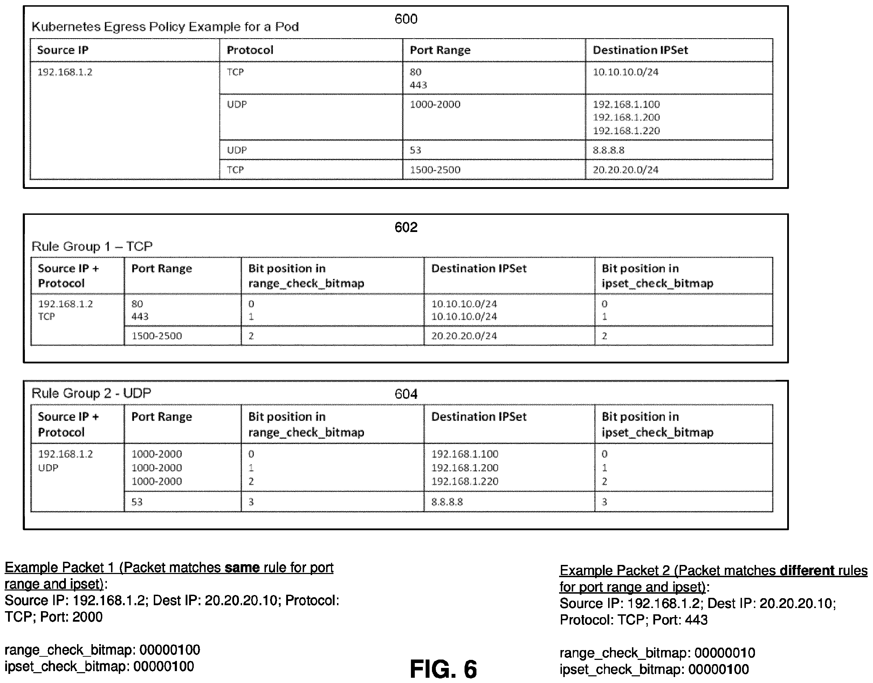

FIG. 6 shows an example of mapping a policy of rules to packets. For example, policy 600 can include multiple rules. A control plane can map a policy of rules to packets. For example, the control plane can parallelize evaluation of rules in rule group 602 and 604. For example, in rule group 602, rule 0 can evaluate a port range of 80 for TCP protocol and a destination IP address range of 10.10.10.0 to 10.10.10.24. For example, in rule group 602, rule 1 can evaluate a port range of 443 for TCP protocol and a destination IP address range of 10.10.10.0 to 10.10.10.24. For example, in rule group 602, rule 2 can evaluate a port range of 1500-2500 for TCP protocol and a destination IP address range of 20.20.20.0 to 20.20.20.24.

For example, in rule group 604, rule 0 can evaluate a port range of 1000-2000 for UDP protocol and a destination IP address range of 192.168.1.100. For example, in rule group 604, rule 1 can evaluate a port range of 1000-2000 for UDP protocol and a destination IP address range of 192.168.1.200. For example, in rule group 604, rule 2 can evaluate a port range of 1000-2000 for UDP protocol and a destination IP address range of 192.168.1.220. For example, in rule group 604, rule 3 can evaluate a port range of 53 for UDP protocol and a destination IP address range of 8.8.8.8.

For an example packet 1 with a source IP address of 192.168.1.2, destination IP address of 20.20.20. 10, TCP protocol, and egress port: 2000, rule group 1 (602) can be applied. Rule in bit position 2 can match and a range_check_bitmap output can be 00000100. In addition, the destination IP address of 20.20.20.10 can match the IPSet for rule in bit position 2 and the ipset_check_bitmap output can be 00000100. As there is a match between range_check_bitmap and ipset_check_bitmap, an action can be performed for packet 1 and a policy can be pinned for the tuple associated with packet 1 to utilization for other packets of the same flow as packet 1.

For an example packet 2 with a source IP address of 192.168.1.2, destination IP address of 20.20.20.10, TCP protocol, and egress port: 443, rule group 2 (604) can be applied. Rule in bit position 1 can match and a range_check_bitmap output can be 00000010. In addition, the destination IP address of 20.20.20.10 can match the IPSet for rule in bit position 2 and the ipset check _bitmap output can be 00000100. As there is a mismatch between range_check_bitmap and ipset_check_bitmap, packet 2 can be dropped and other actions can be performed (e.g., log an error, contact a data center administrator, or others).

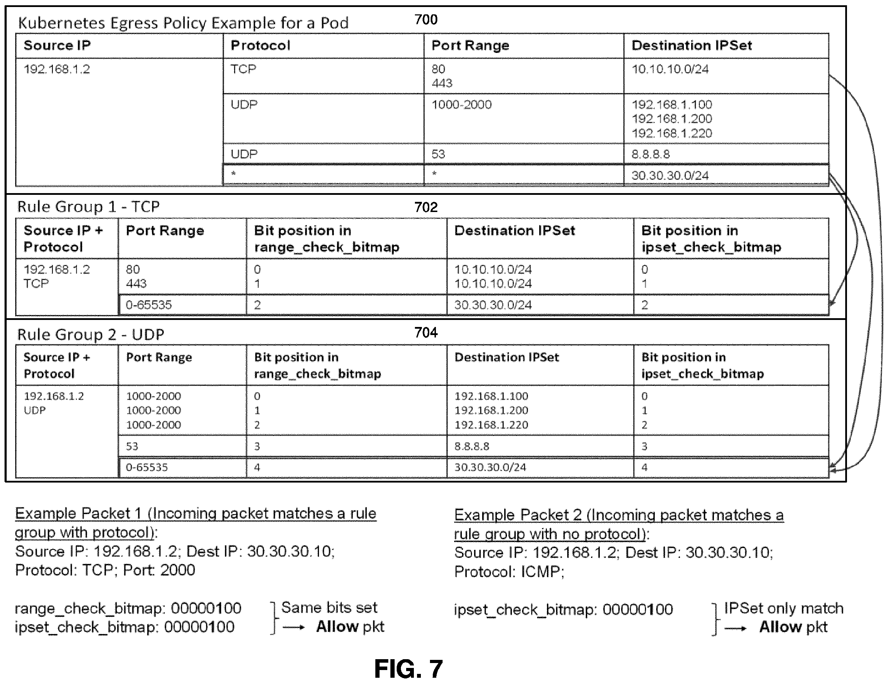

For a policy with at least one rule that specifies a protocol and at least one rule that does not specify a protocol, the control plane can add the rule with no protocol to groups with a protocol defined and an additional group with no protocol. If a packet arrives with one of the protocols that are part of the rule group, then the packet can match to the rule group (e.g., pod IP address and protocol). If a packet arrives with a protocol that does not match one of the protocols that are part of a rule group, the packet can be matched with the no protocol group. FIG. 7 depicts an example of mapping the policy to rules and rule groups.

For example, policy 700 can include a rule that does not specify a protocol (e.g., protocol = *) but specifies a permitted destination IP address range (e.g., 30.30.30.0 to 30.30.30.24). Rule group 1 (702) can include port range rules and destination IP addresses for TCP protocol packets. Rule group 2 (704) can include port range rules and destination IP addresses for UDP protocol packets. A control plane can add a rule to rule group 1 (702) and rule group 2 (704) that includes an entire range of port ranges (e.g., 0-65535) and a permitted range of destination IP addresses (e.g., 30.30.30.0 to 30.30.30.24).

For example, for a TCP protocol packet or packet with protocol that is neither TCP or UDP, a packet processing pipeline can perform rules in rule group 1 (702) in parallel. For example, for a UDP protocol packet or packet with protocol that is neither TCP or UDP, a packet processing pipeline can perform rules in rule group 2 (704) in parallel.

For an example packet 1 with source IP address of 192.168.1.2, destination IP address of 30.30.30.10, TCP protocol, and egress port of 2000, rule group 1 (702) can be applied. A rule associated with bit position 2 can match and a range_check_bitmap output can be 00000100. In addition, the destination IP address of 30.30.30.10 can match the IPSet for a rule associated with bit position 2 and the ipset_check_bitmap output can be 00000100. As there is a match between range_check_bitmap and ipset_check_bitmap, an action can be performed for packet 1 and a policy can be pinned for the tuple associated with packet 1 to utilization for other packets of the same flow as packet 1.

For an example packet 2 with a source IP address of 192.168.1.2, destination IP address of 30.30.30.10, UDP protocol, and no egress port specified, rule group 2 (604) can be applied. An egress port of the packet may not be compared against a range as the packet does not include a specified egress port. In addition, the destination IP address of 30.30.30.10 can match the IPSet for rule in bit position 2 and the ipset_check_bitmap output can be 00000100. There is merely a match in IPSet and the packet can be allowed to egress and a policy can be pinned for the tuple associated with packet 2 to utilization for other packets of the same flow as packet 2.

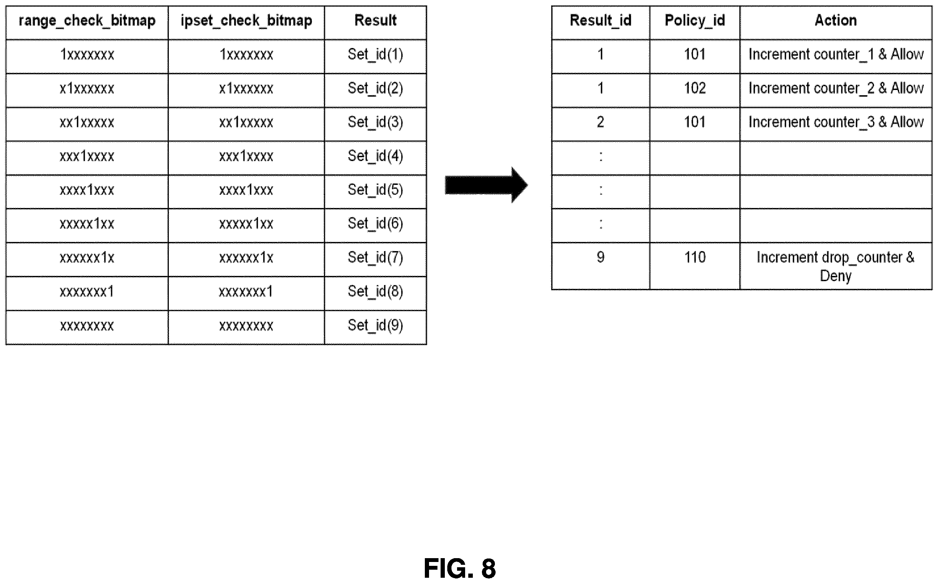

Additional actions can be performed in addition to making an allow/deny decision. An example is incrementing per-policy counters. FIG. 8 shows an example of actions of a set of one or more actions that can be performed based on a match of range check and IPset bitmaps. Based on a match of bitmap, a result can be to provide an identifier (set_id) that identifies as set of one or more actions to perform. A set of one or more actions can include: increment counter of a count of number of allowed packets, increment counter of a count of number of dropped packets, increment counter of existing flows in the network interface device, allow and log, deny and log, or others).

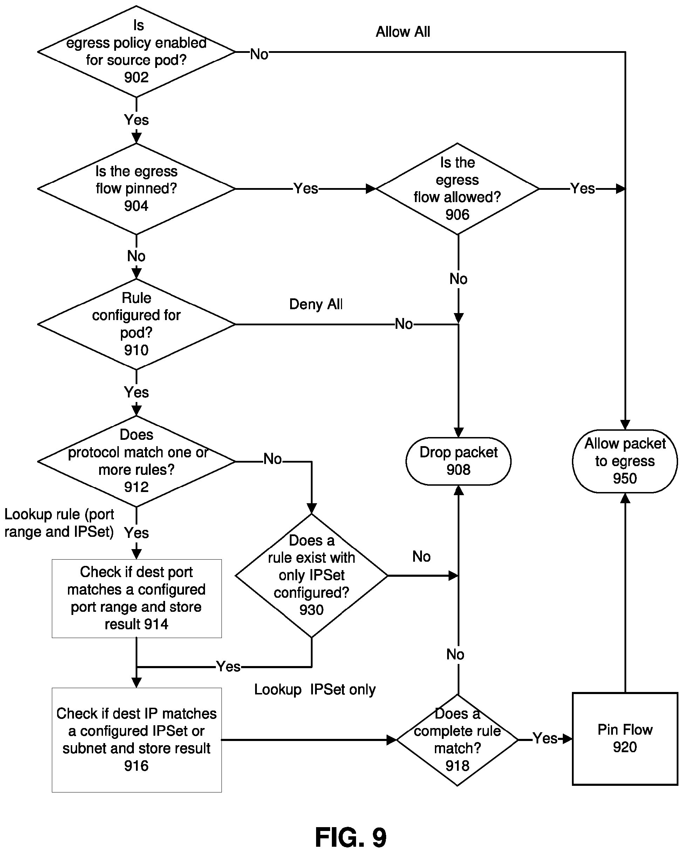

FIG. 9 depicts an example process. The process can be performed by a network interface device in response to a packet to be transmitted. At 902, a determination can be made as to whether an egress policy is enabled for a source pod. For example, an egress policy can indicate that one or more rules are to be applied that restrict communications from the source pod to one or more destination pods. Based on an egress policy being enabled for the source pod, the process can continue to 904. Based on no egress policy being enabled for the source pod, the process can continue to 950, to allow communications to a destination pod and allow egress of the packet.

At 904, a determination can be made as to whether the egress flow is pinned so that a rule is programmed to apply to the packet. The pinned rule can identify a packet flow that is permitted to egress. For example, an egress flow can be pinned based on a prior packet of the packet flow having a destination port that is within a permitted range and a destination IP address that is within a permitted range. The prior packet of the packet flow could have been validated based on parallel evaluation and bitmap comparisons, as described herein. Based on the egress flow being pinned, the process can proceed to 906. Based on the egress flow not being pinned, the process can proceed to 910.

At 906, a determination can be made as to whether the pinned rule permits egress of the packet. For example, the pinned rule can permit egress of the packet based on the packet having a destination port that is within a permitted range and a destination IP address that is within a permitted range. Based on the pinned rule not permitting egress of the packet, the process can proceed to 908, to drop the packet. Based on the pinned rule permitting egress of the packet, the process can proceed to 950.

At 910, a determination can be made as to whether a rule has been configured for the source pod. For example, a rule can be configured for the source pod in a packet processing circuitry of a network interface device as one or more ACLs. Based on the rule having not been configured for the source pod, the process can proceed to 908, to drop the packet and/or alert an administrator of no configuration of the network interface device with a rule. Based on the rule having been configured for the source pod, the process can proceed to 912.

At 912, a determination can be made as to whether a protocol of the packet matches one or more rules for the source pod. Based on a protocol of the packet matching one or more rules for the source pod, the process can proceed to 914. Based on a protocol of the packet not matching one or more rules for the source pod, the process can proceed to 930.

At 914, a check can be performed against a rule of a permitted destination port range. A pass or fail result permitted destination port range can be recorded for the packet in a first bitmap. At 916, a check can be performed against a rule of a permitted destination IP address range. A pass or fail result against the permitted destination IP address range can be recorded for the packet in a second bitmap. At 918, based on destination port range and destination IP address range passing for the packet, the process can proceed to 920, to pin a flow of the packet for utilization to permit or deny egress of subsequent packets of the flow. For example, destination port range and destination IP address range passing for the packet can be based on first and second bitmaps matching.

At 930, a determination can be made as to whether a rule for a permitted destination IP address range is configured. Based on the permitted destination IP address range being configured, the process can proceed to 916. Based on the permitted destination IP address range not being configured, the process can proceed to 908.

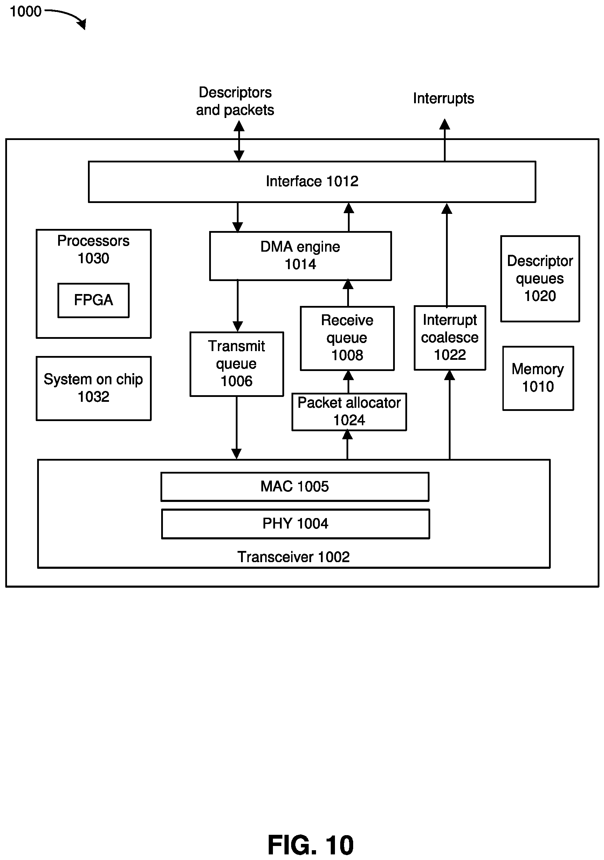

FIG. 10 depicts an example network interface device. In some examples, processors and/or FPGAs 1030 can be configured to perform parallel evaluation of network policy and firewall ACL rules in the network interface device, as described herein. Network interface device can be configured as an endpoint receiver that is multi home and receives time ordered packets, potentially reorders packets, and coalesces packet contents before copying packet contents up to a host. Some examples of network interface 1000 are part of an Infrastructure Processing Unit (IPU) or data processing unit (DPU) or utilized by an IPU or DPU. An xPU can refer at least to an IPU, DPU, graphics processing unit (GPU), general purpose GPU (GPGPU), or other processing units (e.g., accelerator devices). An IPU or DPU can include a network interface with one or more programmable pipelines or fixed function processors to perform offload of operations that could have been performed by a CPU. The IPU or DPU can include one or more memory devices. In some examples, the IPU or DPU can perform virtual switch operations, manage storage transactions (e.g., compression, cryptography, virtualization), and manage operations performed on other IPUs, DPUs, servers, or devices.

Network interface 1000 can include transceiver 1002, processors 1030, transmit queue 1006, receive queue 1008, memory 1010, and interface 1012, and DMA engine 1014. Transceiver 1002 can be capable of receiving and transmitting packets in conformance with the applicable protocols such as Ethernet as described in IEEE 802.3, although other protocols may be used. Transceiver 1002 can receive and transmit packets from and to a network via a network medium (not depicted). Transceiver 1002 can include PHY circuitry 1004 and media access control (MAC) circuitry 1005. PHY circuitry 1004 can include encoding and decoding circuitry (not shown) to encode and decode data packets according to applicable physical layer specifications or standards. MAC circuitry 1005 can be configured to perform MAC address filtering on received packets, process MAC headers of received packets by verifying data integrity, remove preambles and padding, and provide packet content for processing by higher layers. MAC circuitry 1016 can be configured to assemble data to be transmitted into packets, that include destination and source addresses along with network control information and error detection hash values.

Processors 1030 can be one or more of: combination of: a processor, core, graphics processing unit (GPU), field programmable gate array (FPGA), application specific integrated circuit (ASIC), or other programmable hardware device that allow programming of network interface 1000. For example, a "smart network interface" or SmartNIC can provide packet processing capabilities in the network interface using processors 1030.

Processors 1030 can include a programmable processing pipeline or offload circuitries that is programmable by P4, Software for Open Networking in the Cloud (SONiC), Broadcom^{®} Network Programming Language (NPL), NVIDIA^{®} CUDA9, NVIDIA^{®} DOCA^{™}, Data Plane Development Kit (DPDK), OpenDataPlane (ODP), Infrastructure Programmer Development Kit (IPDK), eBPF, x86 compatible executable binaries or other executable binaries. A programmable processing pipeline can include one or more match-action units (MAUs) that are configured based on a programmable pipeline language instruction set. Processors, FPGAs, other specialized processors, controllers, devices, and/or circuits can be utilized for packet processing or packet modification. Ternary content-addressable memory (TCAM) can be used for parallel match-action or look-up operations on packet header content.

Packet allocator 1024 can provide distribution of received packets for processing by multiple CPUs or cores using receive side scaling (RSS). When packet allocator 1024 uses RSS, packet allocator 1024 can calculate a hash or make another determination based on contents of a received packet to determine which CPU or core is to process a packet.

Interrupt coalesce 1022 can perform interrupt moderation whereby interrupt coalesce 1022 waits for multiple packets to arrive, or for a time-out to expire, before generating an interrupt to host system to process received packet(s). Receive Segment Coalescing (RSC) can be performed by network interface 1000 whereby portions of incoming packets are combined into a coalesced packet. Network interface 1000 provides this coalesced packet to an application.

Direct memory access (DMA) engine 1014 can copy a packet header, packet payload, and/or descriptor directly from host memory to the network interface or vice versa, instead of copying the packet to an intermediate buffer at the host and then using another copy operation from the intermediate buffer to the destination buffer.

In some examples, processors 1030 can be configured to perform packet re-ordering to re-order packets according to time stamp values and/or packet sequence numbers prior to copying packets through interface 1012 to a host system.

Memory 1010 can be volatile and/or non-volatile memory device and can store any queue or instructions used to program network interface 1000. Transmit traffic manager can schedule transmission of packets from transmit queue 1006. Transmit queue 1006 can include data or references to data for transmission by network interface. Receive queue 1008 can include data or references to data that was received by network interface from a network. Descriptor queues 1020 can include descriptors that reference data or packets in transmit queue 1006 or receive queue 1008. Interface 1012 can provide an interface with host device (not depicted). For example, interface 1012 can be compatible with or based at least in part on PCI, PCIe, PCI-x, Serial ATA, and/or USB (although other interconnection standards may be used), or proprietary variations thereof.

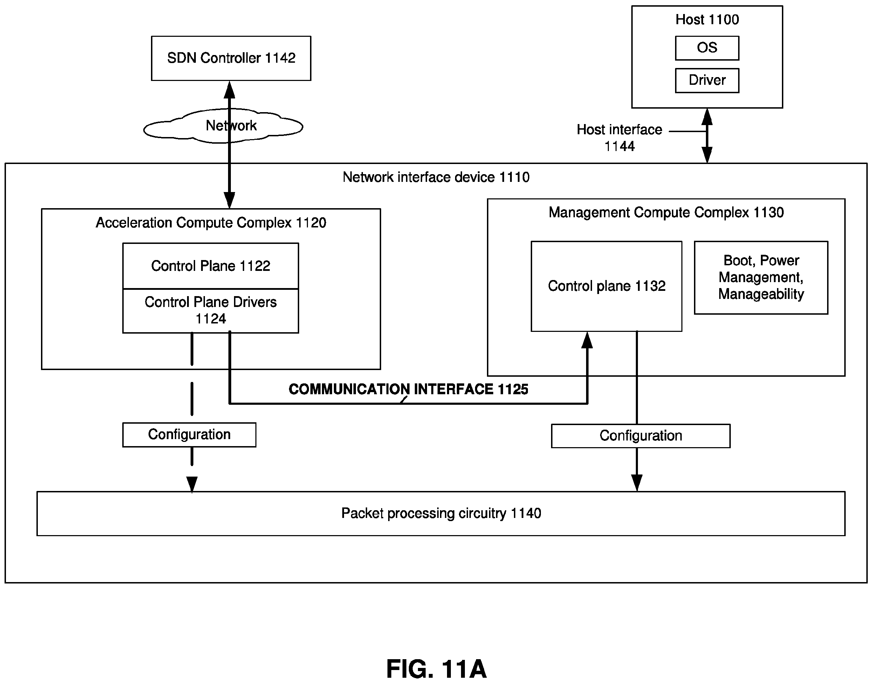

FIG. 11A depicts an example network interface device. Host 1100 can include processors, memory devices, device interfaces, as well as other circuitry such as described herein. Processors of host 1100 can execute software such as applications (e.g., microservices, virtual machine (VMs), microVMs, containers, processes, threads, or other virtualized execution environments), operating system (OS), and device drivers. An OS or device driver can configure network interface device or packet processing device 1110 to utilize one or more control planes to communicate with software defined networking (SDN) controller 1150 via a network to configure operation of the one or more control planes.

Packet processing device 1110 can include multiple compute complexes, such as an Acceleration Compute Complex (ACC) 1120 and Management Compute Complex (MCC) 1130, as well as packet processing circuitry 1140 and network interface technologies for communication with other devices via a network. ACC 1120 can be implemented as one or more of: a microprocessor, processor, accelerator, field programmable gate array (FPGA), application specific integrated circuit (ASIC) or circuitry described at least with respect to herein. Similarly, MCC 1130 can be implemented as one or more of: a microprocessor, processor, accelerator, field programmable gate array (FPGA), application specific integrated circuit (ASIC) or circuitry described herein. In some examples, ACC 1120 and MCC 1130 can be implemented as separate cores in a CPU, different cores in different CPUs, different processors in a same integrated circuit, different processors in different integrated circuit.

Packet processing device 1110 can be implemented as one or more of: a microprocessor, processor, accelerator, field programmable gate array (FPGA), application specific integrated circuit (ASIC) or circuitry described herein. Packet processing pipeline circuitry 1140 can process packets as directed or configured by one or more control planes executed by multiple compute complexes. In some examples, ACC 1120 and MCC 1130 can execute respective control planes 1122 and 1132.

Packet processing device 1110, ACC 1120, and/or MCC 1130 can be configured to perform parallel evaluation of network policy and firewall ACL rules in the network interface device, as described herein.

SDN controller 1142 can upgrade or reconfigure software executing on ACC 1120 (e.g., control plane 1122 and/or control plane 1132) through contents of packets received through packet processing device 1110. In some examples, ACC 1120 can execute control plane operating system (OS) (e.g., Linux) and/or a control plane application 1122 (e.g., user space or kernel modules) used by SDN controller 1142 to configure operation of packet processing pipeline 1140. Control plane application 1122 can incude Generic Flow Tables (GFT), ESXi, NSX, Kubernetes control plane software, application software for managing crypto configurations, Programming Protocol-independent Packet Processors (P4) runtime daemon, target specific daemon, Container Storage Interface (CSI) agents, or remote direct memory access (RDMA) configuration agents.

In some examples, SDN controller 1142 can communicate with ACC 1120 using a remote procedure call (RPC) such as Google remote procedure call (gRPC) or other service and ACC 1120 can convert the request to target specific protocol buffer (protobuf) request to MCC 1130. gRPC is a remote procedure call solution based on data packets sent between a client and a server. Although gRPC is an example, other communication schemes can be used such as, but not limited to, Java Remote Method Invocation, Modula-3, RPyC, Distributed Ruby, Erlang, Elixir, Action Message Format, Remote Function Call, Open Network Computing RPC, JSON-RPC, and so forth.

In some examples, SDN controller 1142 can provide packet processing rules for performance by ACC 1120. For example, ACC 1120 can program table rules (e.g., header field match and corresponding action) applied by packet processing pipeline circuitry 1140 based on change in policy and changes in VMs, containers, microservices, applications, or other processes. ACC 1120 can be configured to provide network policy as flow cache rules into a table to configure operation of packet processing pipeline 1140. For example, the ACC-executed control plane application 1122 can configure rule tables applied by packet processing pipeline circuitry 1140 with rules to define a traffic destination based on packet type and content. ACC 1120 can program table rules (e.g., match-action) into memory accessible to packet processing pipeline circuitry 1140 based on change in policy and changes in VMs.

For example, ACC 1120 can execute a virtual switch such as vSwitch or Open vSwitch (OVS), Stratum, or Vector Packet Processing (VPP) that provides communications between virtual machines executed by host 1100 or with other devices connected to a network. For example, ACC 1120 can configure packet processing pipeline circuitry 1140 as to which VM is to receive traffic and what kind of traffic a VM can transmit. For example, packet processing pipeline circuitry 1140 can execute a virtual switch such as vSwitch or Open vSwitch that provides communications between virtual machines executed by host 1100 and packet processing device 1110.

MCC 1130 can execute a host management control plane, global resource manager, and perform hardware registers configuration. Control plane 1132 executed by MCC 1130 can perform provisioning and configuration of packet processing circuitry 1140. For example, a VM executing on host 1100 can utilize packet processing device 1110 to receive or transmit packet traffic. MCC 1130 can execute boot, power, management, and manageability software (SW) or firmware (FW) code to boot and initialize the packet processing device 1110, manage the device power consumption, provide connectivity to Baseboard Management Controller (BMC), and other operations.

One or both control planes of ACC 1120 and MCC 1130 can define traffic routing table content and network topology applied by packet processing circuitry 1140 to select a path of a packet in a network to a next hop or to a destination network-connected device. For example, a VM executing on host 1100 can utilize packet processing device 1110 to receive or transmit packet traffic.

ACC 1120 can execute control plane drivers to communicate with MCC 1130. At least to provide a configuration and provisioning interface between control planes 1122 and 1132, communication interface 1125 can provide control-plane-to-control plane communications. Control plane 1132 can perform a gatekeeper operation for configuration of shared resources. For example, via communication interface 1125, ACC control plane 1122 can communicate with control plane 1132 to perform one or more of: determine hardware capabilities, access the data plane configuration, reserve hardware resources and configuration, communications between ACC and MCC through interrupts or polling, subscription to receive hardware events, perform indirect hardware registers read write for debuggability, flash and physical layer interface (PHY) configuration, or perform system provisioning for different deployments of network interface device such as: storage node, tenant hosting node, microservices backend, compute node, or others.

Communication interface 1125 can be utilized by a negotiation protocol and configuration protocol running between ACC control plane 1122 and MCC control plane 1132. Communication interface 1125 can include a general purpose mailbox for different operations performed by packet processing circuitry 1140. Examples of operations of packet processing circuitry 1140 include issuance of non-volatile memory express (NVMe) reads or writes, issuance of Non-volatile Memory Express over Fabrics (NVMe-oF^{™}) reads or writes, lookaside crypto Engine (LCE) (e.g., compression or decompression), Address Translation Engine (ATE) (e.g., input output memory management unit (IOMMU) to provide virtual-to-physical address translation), encryption or decryption, configuration as a storage node, configuration as a tenant hosting node, configuration as a compute node, provide multiple different types of services between different Peripheral Component Interconnect Express (PCIe) end points, or others.

Communication interface 1125 can include one or more mailboxes accessible as registers or memory addresses. For communications from control plane 1122 to control plane 1132, communications can be written to the one or more mailboxes by control plane drivers 1124. For communications from control plane 1132 to control plane 1122, communications can be written to the one or more mailboxes. Communications written to mailboxes can include descriptors which include message opcode, message error, message parameters, and other information. Communications written to mailboxes can include defined format messages that convey data.

Communication interface 1125 can provide communications based on writes or reads to particular memory addresses (e.g., dynamic random access memory (DRAM)), registers, other mailbox that is written-to and read-from to pass commands and data. To provide for secure communications between control planes 1122 and 1132, registers and memory addresses (and memory address translations) for communications can be available only to be written to or read from by control planes 1122 and 1132 or cloud service provider (CSP) software executing on ACC 1120 and device vendor software, embedded software, or firmware executing on MCC 1130. Communication interface 1125 can support communications between multiple different compute complexes such as from host 1100 to MCC 1130, host 1100 to ACC 1120, MCC 1130 to ACC 1120, or others.

Packet processing circuitry 1140 can be implemented using one or more of: application specific integrated circuit (ASIC), field programmable gate array (FPGA), processors executing software, or other circuitry. Control plane 1122 and/or 1132 can configure packet processing pipeline circuitry 1140 or other processors to perform operations related to NVMe, NVMe-oF reads or writes, lookaside crypto Engine (LCE), Address Translation Engine (ATE), local area network (LAN), compression/decompression, encryption/decryption, or other accelerated operations.

Various message formats can be used to configure ACC 1120 or MCC 1130. In some examples, a P4 program can be compiled and provided to MCC 1130 to configure packet processing circuitry 1140 to perform parallel evaluation of network policy and firewall ACL rules in the network interface device, as described herein.

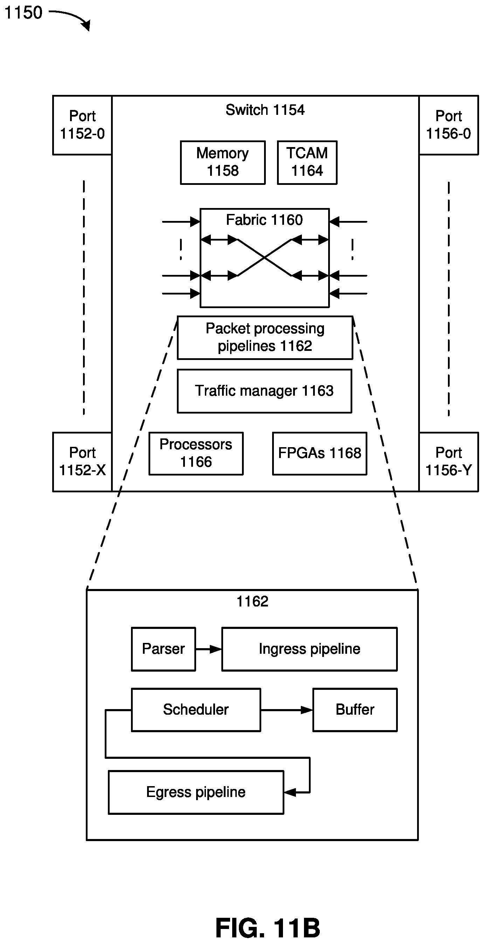

FIG. 11B depicts an example switch. Various examples can be used in or with the switch to perform parallel evaluation of network policy and firewall ACL rules in the network interface device, as described herein. Switch 1154 can route packets or frames of any format or in accordance with any specification from any port 1152-0 to 1152-X to any of ports 1156-0 to 1156-Y (or vice versa). One or more of ports 1152-0 to 1152-X can be connected to a network of one or more interconnected devices. Similarly, any of ports 1156-0 to 1156-Y can be connected to a network of one or more interconnected devices.

In some examples, switch fabric 1160 can provide routing of packets from one or more ingress ports for processing prior to egress from switch 1154. Switch fabric 1160 can be implemented as one or more multi-hop topologies, where example topologies include torus, butterflies, buffered multi-stage, etc., or shared memory switch fabric (SMSF), among other implementations. SMSF can be any switch fabric connected to ingress ports and egress ports in the switch, where ingress subsystems write (store) packet segments into the fabric's memory, while the egress subsystems read (fetch) packet segments from the fabric's memory.

Memory 1158 can be configured to store packets received at ports prior to egress from one or more ports. Packet processing pipelines 1162 can include ingress and egress packet processing circuitry to respectively process ingressed packets and packets to be egressed.

In some examples, packet processing pipelines 1162 can include a parser, an ingress pipeline, a buffer, scheduler, and egress pipelines. In some examples, packet processing pipelines 1162 can perform operations of traffic manager 1163.

Packet processing pipelines 1162 can determine which port to transfer packets or frames to using a table that maps packet characteristics with an associated output port. Packet processing pipelines 1162 can be configured to perform match-action on received packets to identify packet processing rules and next hops using information stored in a ternary content-addressable memory (TCAM) tables or exact match tables in some examples. For example, match-action tables or circuitry can be used whereby a hash of a portion of a packet is used as an index to find an entry (e.g., forwarding decision based on a packet header content). Packet processing pipelines 1162 can implement access control list (ACL) or packet drops due to queue overflow. Packet processing pipelines 1162 can be configured to perform parallel evaluation of network policy and firewall ACL rules in the network interface device, as described herein. Configuration of operation of packet processing pipelines 1162, including its data plane, can be programmed using P4, C, Python, Broadcom Network Programming Language (NPL), or x86 compatible executable binaries or other executable binaries. Processors 1166 and FPGAs 1168 can be utilized for packet processing or modification.

Traffic manager 1163 can perform hierarchical scheduling and transmit rate shaping and metering of packet transmissions from one or more packet queues. Traffic manager 1163 can perform congestion management such as flow control, congestion notification message (CNM) generation and reception, priority flow control (PFC), and others. Circuitry and software of a network interface described herein can be utilized by switch 1154, including a MAC and SerDes.

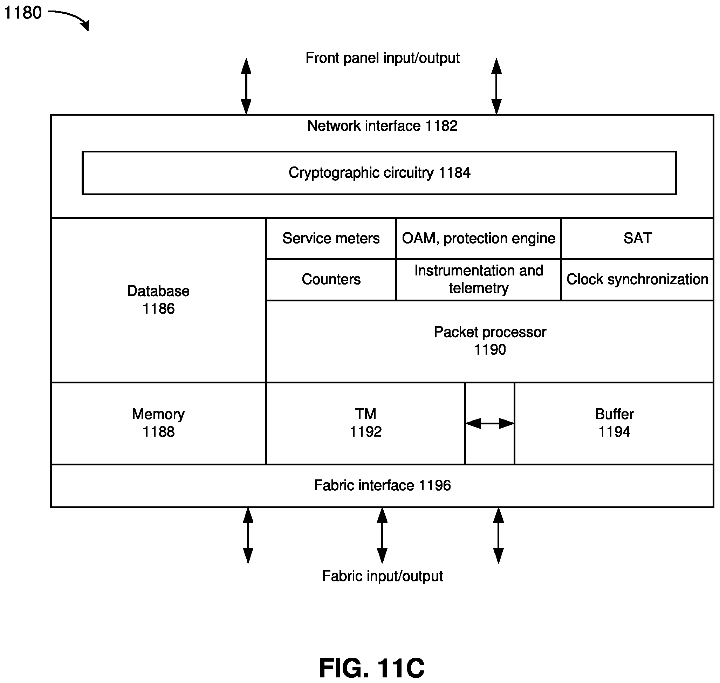

FIG. 11C depicts an example switch. Various examples can be used in or with the switch to perform parallel evaluation of network policy and firewall ACL rules in the network interface device, as described herein. Switch 1180 can include a network interface 1182 that can provide an Ethernet consistent interface. Network interface 1182 can support 25 GbE, 50 GbE, 100 GbE, 200 GbE, 400GbE Ethernet port interfaces. Cryptographic circuitry 1184 can perform at least Media Access Control security (MACsec) or Internet Protocol Security (IPSec) decryption for received packets or encryption for packets to be transmitted.

Various circuitry can perform one or more of: service metering, packet counting, operations, administration, and management (OAM), protection engine, instrumentation and telemetry, and clock synchronization (e.g., based on IEEE 1588).

Database 1186 can store a device's profile to configure operations of switch 1180. Memory 1188 can include High Bandwidth Memory (HBM) for packet buffering. Packet processor 1190 can perform one or more of: decision of next hop in connection with packet forwarding, packet counting, access-list operations, bridging, routing, Multiprotocol Label Switching (MPLS), virtual private LAN service (VPLS), L2VPNs, L3VPNs, OAM, Data Center Tunneling Encapsulations (e.g., VXLAN and NV-GRE), or others. Packet processor 1190 can include one or more FPGAs. Buffer 1194 can store one or more packets. Traffic manager (TM) 1192 can provide per-subscriber bandwidth guarantees in accordance with service level agreements (SLAs) as well as performing hierarchical quality of service (QoS). Fabric interface 1196 can include a serializer/de-serializer (SerDes) and provide an interface to a switch fabric.

Operations of components of switches of examples of devices described herein can be combined and components of the switches described herein can be included in other examples of switches of examples described herein. For example, components of examples of switches described herein can be implemented in a switch system on chip (SoC) that includes at least one interface to other circuitry in a switch system. A switch SoC can be coupled to other devices in a switch system such as ingress or egress ports, memory devices, or host interface circuitry.

FIG. 12 depicts a system. In some examples, circuitry of system 1200 can configure network interface device 1250 to perform parallel evaluation of network policy and firewall ACL rules in the network interface device, as described herein. System 1200 includes processor 1210, which provides processing, operation management, and execution of instructions for system 1200. Processor 1210 can include any type of microprocessor, central processing unit (CPU), graphics processing unit (GPU), XPU, processing core, or other processing hardware to provide processing for system 1200, or a combination of processors. An XPU can include one or more of: a CPU, a graphics processing unit (GPU), general purpose GPU (GPGPU), and/or other processing units (e.g., accelerators or programmable or fixed function FPGAs). Processor 1210 controls the overall operation of system 1200, and can be or include, one or more programmable general-purpose or special-purpose microprocessors, digital signal processors (DSPs), programmable controllers, application specific integrated circuits (ASICs), programmable logic devices (PLDs), or the like, or a combination of such devices.

In one example, system 1200 includes interface 1212 coupled to processor 1210, which can represent a higher speed interface or a high throughput interface for system components that needs higher bandwidth connections, such as memory subsystem 1220 or graphics interface components 1240, or accelerators 1242. Interface 1212 represents an interface circuit, which can be a standalone component or integrated onto a processor die. Where present, graphics interface 1240 interfaces to graphics components for providing a visual display to a user of system 1200. In one example, graphics interface 1240 generates a display based on data stored in memory 1230 or based on operations executed by processor 1210 or both. In one example, graphics interface 1240 generates a display based on data stored in memory 1230 or based on operations executed by processor 1210 or both.

Accelerators 1242 can be a programmable or fixed function offload engine that can be accessed or used by a processor 1210. For example, an accelerator among accelerators 1242 can provide data compression (DC) capability, cryptography services such as public key encryption (PKE), cipher, hash/authentication capabilities, decryption, or other capabilities or services. In some cases, accelerators 1242 can be integrated into a CPU socket (e.g., a connector to a motherboard or circuit board that includes a CPU and provides an electrical interface with the CPU). For example, accelerators 1242 can include a single or multi-core processor, graphics processing unit, logical execution unit single or multi-level cache, functional units usable to independently execute programs or threads, application specific integrated circuits (ASICs), neural network processors (NNPs), programmable control logic, and programmable processing elements such as field programmable gate arrays (FPGAs). Accelerators 1242 can provide multiple neural networks, CPUs, processor cores, general purpose graphics processing units, or graphics processing units can be made available for use by artificial intelligence (AI) or machine learning (ML) models. For example, the AI model can use or include any or a combination of: a reinforcement learning scheme, Q-learning scheme, deep-Q learning, or Asynchronous Advantage Actor-Critic (A3C), combinatorial neural network, recurrent combinatorial neural network, or other AI or ML model. Multiple neural networks, processor cores, or graphics processing units can be made available for use by AI or ML models to perform learning and/or inference operations.

Memory subsystem 1220 represents the main memory of system 1200 and provides storage for code to be executed by processor 1210, or data values to be used in executing a routine. Memory subsystem 1220 can include one or more memory devices 1230 such as read-only memory (ROM), flash memory, one or more varieties of random access memory (RAM) such as DRAM, or other memory devices, or a combination of such devices. Memory 1230 stores and hosts, among other things, operating system (OS) 1232 to provide a software platform for execution of instructions in system 1200. Additionally, applications 1234 can execute on the software platform of OS 1232 from memory 1230. Applications 1234 represent programs that have their own operational logic to perform execution of one or more functions. Processes 1236 represent agents or routines that provide auxiliary functions to OS 1232 or one or more applications 1234 or a combination. OS 1232, applications 1234, and processes 1236 provide software logic to provide functions for system 1200. In one example, memory subsystem 1220 includes memory controller 1222, which is a memory controller to generate and issue commands to memory 1230. It will be understood that memory controller 1222 could be a physical part of processor 1210 or a physical part of interface 1212. For example, memory controller 1222 can be an integrated memory controller, integrated onto a circuit with processor 1210.

Applications 1234 and/or processes 1236 can refer instead or additionally to a virtual machine (VM), container, microservice, processor, or other software. Various examples described herein can perform an application composed of microservices, where a microservice runs in its own process and communicates using protocols (e.g., application program interface (API), a Hypertext Transfer Protocol (HTTP) resource API, message service, remote procedure calls (RPC), or Google RPC (gRPC)). Microservices can communicate with one another using a service mesh and be executed in one or more data centers or edge networks. Microservices can be independently deployed using centralized management of these services. The management system may be written in different programming languages and use different data storage technologies. A microservice can be characterized by one or more of: polyglot programming (e.g., code written in multiple languages to capture additional functionality and efficiency not available in a single language), or lightweight container or virtual machine deployment, and decentralized continuous microservice delivery.

In some examples, OS 1232 can be Linux^{®}, FreeBSD, Windows^{®} Server or personal computer, FreeBSD^{®}, Android^{®}, MacOS^{®}, iOS^{®}, VMware vSphere, openSUSE, RHEL, CentOS, Debian, Ubuntu, or any other operating system. The OS and driver can execute on a processor sold or designed by Intel^{®}, ARM9, AMD^{®}, Qualcomm^{®}, IBM^{®}, Nvidia^{®}, Broadcom^{®}, Texas Instruments^{®}, among others.

In some examples, OS 1232, a system administrator, and/or orchestrator can enable or disable network interface 1250 to perform parallel evaluation of network policy and firewall ACL rules in the network interface device, as described herein.

While not specifically illustrated, it will be understood that system 1200 can include one or more buses or bus systems between devices, such as a memory bus, a graphics bus, interface buses, or others. Buses or other signal lines can communicatively or electrically couple components together, or both communicatively and electrically couple the components. Buses can include physical communication lines, point-to-point connections, bridges, adapters, controllers, or other circuitry or a combination. Buses can include, for example, one or more of a system bus, a Peripheral Component Interconnect (PCI) bus, a Hyper Transport or industry standard architecture (ISA) bus, a small computer system interface (SCSI) bus, a universal serial bus (USB), or an Institute of Electrical and Electronics Engineers (IEEE) standard 1394 bus (Firewire).

In one example, system 1200 includes interface 1214, which can be coupled to interface 1212. In one example, interface 1214 represents an interface circuit, which can include standalone components and integrated circuitry. In one example, multiple user interface components or peripheral components, or both, couple to interface 1214. Network interface 1250 provides system 1200 the ability to communicate with remote devices (e.g., servers or other computing devices) over one or more networks. Network interface 1250 can include an Ethernet adapter, wireless interconnection components, cellular network interconnection components, USB (universal serial bus), or other wired or wireless standards-based or proprietary interfaces. Network interface 1250 can transmit data to a device that is in the same data center or rack or a remote device, which can include sending data stored in memory. Network interface 1250 can receive data from a remote device, which can include storing received data into memory. In some examples, packet processing device or network interface device 1250 can refer to one or more of: a network interface controller (NIC), a remote direct memory access (RDMA)-enabled NIC, SmartNIC, router, switch, forwarding element, infrastructure processing unit (IPU), or data processing unit (DPU). An example IPU or DPU is described herein.

In one example, system 1200 includes one or more input/output (I/O) interface(s) 1260. I/O interface 1260 can include one or more interface components through which a user interacts with system 1200. Peripheral interface 1270 can include any hardware interface not specifically mentioned above. Peripherals refer generally to devices that connect dependently to system 1200.

In one example, system 1200 includes storage subsystem 1280 to store data in a nonvolatile manner. In one example, in certain system implementations, at least certain components of storage 1280 can overlap with components of memory subsystem 1220. Storage subsystem 1280 includes storage device(s) 1284, which can be or include any conventional medium for storing large amounts of data in a nonvolatile manner, such as one or more magnetic, solid state, or optical based disks, or a combination. Storage 1284 holds code or instructions and data 1286 in a persistent state (e.g., the value is retained despite interruption of power to system 1200). Storage 1284 can be generically considered to be a "memory," although memory 1230 is typically the executing or operating memory to provide instructions to processor 1210. Whereas storage 1284 is nonvolatile, memory 1230 can include volatile memory (e.g., the value or state of the data is indeterminate if power is interrupted to system 1200). In one example, storage subsystem 1280 includes controller 1282 to interface with storage 1284. In one example controller 1282 is a physical part of interface 1214 or processor 1210 or can include circuits or logic in both processor 1210 and interface 1214.

A volatile memory can include memory whose state (and therefore the data stored in it) is indeterminate if power is interrupted to the device. A non-volatile memory (NVM) device can include a memory whose state is determinate even if power is interrupted to the device.

In some examples, system 1200 can be implemented using interconnected compute platforms of processors, memories, storages, network interfaces, and other components. High speed interconnects can be used such as: Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Peripheral Component Interconnect express (PCIe), Intel QuickPath Interconnect (QPI), Intel Ultra Path Interconnect (UPI), Intel On-Chip System Fabric (IOSF), Omni-Path, Compute Express Link (CXL), HyperTransport, high-speed fabric, NVLink, Advanced Microcontroller Bus Architecture (AMBA) interconnect, OpenCAPI, Gen-Z, Infinity Fabric (IF), Cache Coherent Interconnect for Accelerators (CCIX), 3GPP Long Term Evolution (LTE) (4G), 3GPP 5G, and variations thereof. Data can be copied or stored to virtualized storage nodes or accessed using a protocol such as NVMe over Fabrics (NVMe-oF) or NVMe (e.g., a non-volatile memory express (NVMe) device can operate in a manner consistent with the Non-Volatile Memory Express (NVMe) Specification, revision 1.3c, published on May 24, 2018 ("NVMe specification") or derivatives or variations thereof).

In an example, system 1200 can be implemented using interconnected compute platforms of processors, memories, storages, network interfaces, and other components. High speed interconnects can be used such as PCIe, Ethernet, or optical interconnects (or a combination thereof).

Examples herein may be implemented in various types of computing and networking equipment, such as switches, routers, racks, and blade servers such as those employed in a data center and/or server farm environment. The servers used in data centers and server farms comprise arrayed server configurations such as rack-based servers or blade servers. These servers are interconnected in communication via various network provisions, such as partitioning sets of servers into Local Area Networks (LANs) with appropriate switching and routing facilities between the LANs to form a private Intranet. For example, cloud hosting facilities may typically employ large data centers with a multitude of servers. A blade comprises a separate computing platform that is configured to perform server-type functions, that is, a "server on a card." Accordingly, a blade includes components common to conventional servers, including a main printed circuit board (main board) providing internal wiring (e.g., buses) for coupling appropriate integrated circuits (ICs) and other components mounted to the board.

Various examples may be implemented using hardware elements, software elements, or a combination of both. In some examples, hardware elements may include devices, components, processors, microprocessors, circuits, circuit elements (e.g., transistors, resistors, capacitors, inductors, and so forth), integrated circuits, ASICs, PLDs, DSPs, FPGAs, memory units, logic gates, registers, semiconductor device, chips, microchips, chip sets, and so forth. In some examples, software elements may include software components, programs, applications, computer programs, application programs, system programs, machine programs, operating system software, middleware, firmware, software modules, routines, subroutines, functions, methods, procedures, software interfaces, APIs, instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given implementation. A processor can be one or more combination of a hardware state machine, digital control logic, central processing unit, or any hardware, firmware and/or software elements.

Some examples may be implemented using or as an article of manufacture or at least one computer-readable medium. A computer-readable medium may include a non-transitory storage medium to store logic. In some examples, the non-transitory storage medium may include one or more types of computer-readable storage media capable of storing electronic data, including volatile memory or non-volatile memory, removable or non-removable memory, erasable or non-erasable memory, writeable or re-writeable memory, and so forth. In some examples, the logic may include various software elements, such as software components, programs, applications, computer programs, application programs, system programs, machine programs, operating system software, middleware, firmware, software modules, routines, subroutines, functions, methods, procedures, software interfaces, API, instruction sets, computing code, computer code, code segments, computer code segments, words, values, symbols, or any combination thereof.

According to some examples, a computer-readable medium may include a non-transitory storage medium to store or maintain instructions that when executed by a machine, computing device or system, cause the machine, computing device or system to perform methods and/or operations in accordance with the described examples. The instructions may include any suitable type of code, such as source code, compiled code, interpreted code, executable code, static code, dynamic code, and the like. The instructions may be implemented according to a predefined computer language, manner or syntax, for instructing a machine, computing device or system to perform a certain function. The instructions may be implemented using any suitable high-level, low-level, object-oriented, visual, compiled and/or interpreted programming language.

One or more aspects of at least one example may be implemented by representative instructions stored on at least one machine-readable medium which represents various logic within the processor, which when read by a machine, computing device or system causes the machine, computing device or system to fabricate logic to perform the techniques described herein. Such representations, known as "IP cores" may be stored on a tangible, machine readable medium and supplied to various customers or manufacturing facilities to load into the fabrication machines that actually make the logic or processor.

The appearances of the phrase "one example" or "an example" are not necessarily all referring to the same example or embodiment. Any aspect described herein can be combined with any other aspect or similar aspect described herein, regardless of whether the aspects are described with respect to the same figure or element. Division, omission, or inclusion of block functions depicted in the accompanying figures does not infer that the hardware components, circuits, software and/or elements for implementing these functions would necessarily be divided, omitted, or included in embodiments.

Some examples may be described using the expression "coupled" and "connected" along with their derivatives. For example, descriptions using the terms "connected" and/or "coupled" may indicate that two or more elements are in direct physical or electrical contact. The term "coupled," however, may also mean that two or more elements are not in direct contact, but yet still co-operate or interact.

The terms "first," "second," and the like, herein do not denote any order, quantity, or importance, but rather are used to distinguish one element from another. The terms "a" and "an" herein do not denote a limitation of quantity, but rather denote the presence of at least one of the referenced items. The term "asserted" used herein with reference to a signal denote a state of the signal, in which the signal is active, and which can be achieved by applying any logic level either logic 0 or logic 1 to the signal. The terms "follow" or "after" can refer to immediately following or following after some other event or events. Other sequences of operations may also be performed according to alternative embodiments. Furthermore, additional operations may be added or removed depending on the particular applications. Any combination of changes can be used and one of ordinary skill in the art with the benefit of this disclosure would understand the many variations, modifications, and alternative embodiments thereof.

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to be present. Additionally, conjunctive language such as the phrase "at least one of X, Y, and Z," unless specifically stated otherwise, should also be understood to mean X, Y, Z, or any combination thereof, including "X, Y, and/or Z."'

Illustrative examples of the devices, systems, and methods disclosed herein are provided below. An embodiment of the devices, systems, and methods may include any one or more, and any combination of, the examples described below.

Example 1 includes one or more examples and includes an apparatus that includes: a network interface device comprising: an interface to a port; and circuitry to: perform parallel evaluation of multiple rules for a packet; drop the packet based at least in part on an indication by the parallel evaluation that communication with a target is not permitted; and permit communication of the packet based at least in part on a second indication by the parallel evaluation that communication with the target is permitted.

Example 2 includes one or more examples, wherein the parallel evaluation of multiple rules is to evaluate one or more of: a permitted sender Internet Protocol (IP) address range, a permitted destination IP address range, a permitted packet protocol, or a permitted egress port range.

Example 3 includes one or more examples, wherein the parallel evaluation of multiple rules is to evaluate one or more of: multiple permitted egress port ranges for different packet protocols or one or more Internet Protocol (IP) address ranges.

Example 4 includes one or more examples, wherein the multiple rules are to restrict communications among Kubernetes pods.

Example 5 includes one or more examples, wherein: based on a match of the packet with first and second rules of the multiple rules, the first rule and the second rule indicate different actions for the packet, and the first rule is a higher priority than the second rule, apply an action from the first rule for the packet.

Example 6 includes one or more examples, wherein the parallel evaluation is to generate at least one bitmap that is to indicate a hit or miss for particular rules of the multiple rules and to indicate that communication with the target is permitted or not permitted based on the at least one bitmap.

Example 7 includes one or more examples, wherein: the network interface device comprises a packet processing circuitry that is to perform the parallel evaluation as match-action operations and the network interface device comprises one or more of: a network interface controller (NIC), a remote direct memory access (RDMA)-enabled NIC, SmartNIC, router, switch, forwarding element, infrastructure processing unit (IPU), data processing unit (DPU), or edge processing unit (EPU).

Example 8 includes one or more examples, and includes at least one non-transitory computer-readable medium comprising instructions stored thereon, that if executed by one or more processors, cause the one or more processors to: based on a policy that applies to communications between processes: generate a first rule set that is associated with a first packet protocol for execution by a packet processing circuitry of a network interface device and generate a second rule set that is associated with a second packet protocol for execution by the packet processing circuitry, wherein: the first rule set comprises a first rule and a second rule, the second rule set comprises a third rule and a fourth rule, based on a packet being encoded with the first packet protocol, the packet processing circuitry is to apply the first rule in parallel with the second rule on the packet, and based on the packet being encoded with the second packet protocol, the packet processing circuitry is to apply the third rule in parallel with the fourth rule on the packet.

Example 9 includes one or more examples, wherein: the first rule checks an egress port of the packet against a first range of egress ports, the second rule checks the egress port of the packet against a second range of egress ports, the third rule checks the egress port of the packet against a third range of egress ports, and the fourth rule checks the egress port of the packet against a fourth range of egress ports.

Example 10 includes one or more examples, wherein: the first rule checks a destination Internet Protocol (IP) address of the packet against a first range of destination IP addresses, the second rule checks the destination IP address of the packet against a second range of destination IP addresses, the third rule checks the destination IP address of the packet against a third range of destination IP addresses, and the fourth rule checks the destination IP address of the packet against a fourth range of destination IP addresses.

Example 11 includes one or more examples, wherein: the first rule checks a source Internet Protocol (IP) address of the packet against a first range of source IP addresses, the second rule checks the source IP address of the packet against a second range of source IP addresses, the third rule checks the source IP address of the packet against a third range of source IP addresses, and the fourth rule checks the source IP address of the packet against a fourth range of source IP addresses.

Example 12 includes one or more examples, wherein the packet processing circuitry of the network interface device is to perform a parallel evaluation of rules in the first rule set by generating at least one bitmap that is to indicate a hit or miss for particular rules of the first rule set by the packet, and to indicate that communication with a target process of the processes is permitted or not permitted based on the at least one bitmap.

Example 13 includes one or more examples, wherein based on a match of the packet with the first and second rules of the first rule set, the first rule and the second rule indicate different actions for the packet, and the first rule is a higher priority than a priority of the second rule, the packet processing circuitry is to apply an action from the first rule on the packet.

Example 14 includes one or more examples, wherein the processes comprise Kubernetes pods and the policy restricts communications among Kubernetes pods.

Example 15 includes one or more examples, and includes a method that includes: a network interface device performing: parallel evaluation of multiple rules for a packet by performance of match-action operations; dropping the packet based at least in part on the parallel evaluation indicating that communication with a pod is not permitted; and permitting communication of the packet based at least in part on the parallel evaluation indicating that communication with the pod is permitted.

Example 16 includes one or more examples, wherein the parallel evaluation of multiple rules comprises evaluating one or more of: a permitted sender Internet Protocol (IP) address range, a permitted destination IP address range, a permitted packet protocol, or a permitted egress port range.

Example 17 includes one or more examples, wherein the multiple rules restrict communications among Kubernetes pods.

Example 18 includes one or more examples, and includes based on a match of the packet with the multiple rules, storing an action associated with the match with the multiple rules and the network interface device applying the stored action on subsequent packets of a flow associated with the packet.

Example 19 includes one or more examples, and includes generating at least one bitmap that indicates a hit or miss for particular rules of the multiple rules and indicating that communication with the pod is permitted or not permitted based on the at least one bitmap.

Example 20 includes one or more examples, and includes generating a first bitmap that indicates a hit or miss for a port range check of a first rule of the multiple rules; generating a second bitmap that indicates a hit or miss for an Internet Protocol (IP) range check of the first rule; and indicating that communication with the pod is permitted or not permitted based on the first and second bitmaps.

## Claims

1. An apparatus comprising:
a network interface device comprising:
an interface to a port; and
circuitry to:
perform parallel evaluation of multiple rules for a packet;
drop the packet based at least in part on an indication by the parallel evaluation that communication with a target is not permitted; and
permit communication of the packet based at least in part on a second indication by the parallel evaluation that communication with the target is permitted.

2. The apparatus of claim 1, wherein the parallel evaluation of multiple rules is to evaluate one or more of: a permitted sender Internet Protocol (IP) address range, a permitted destination IP address range, a permitted packet protocol, or a permitted egress port range.

3. The apparatus of any of claims 1-2, wherein the parallel evaluation of multiple rules is to evaluate one or more of: multiple permitted egress port ranges for different packet protocols or one or more Internet Protocol (IP) address ranges.

4. The apparatus of any of claims 1-3, wherein the multiple rules are to restrict communications among Kubernetes pods.

5. The apparatus of any of claims 1-4, wherein:
based on a match of the packet with first and second rules of the multiple rules, the first rule and the second rule indicate different actions for the packet, and the first rule is a higher priority than the second rule, apply an action from the first rule for the packet.

6. The apparatus of any of claims 1-5, wherein the parallel evaluation is to generate at least one bitmap that is to indicate a hit or miss for particular rules of the multiple rules and to indicate that communication with the target is permitted or not permitted based on the at least one bitmap.

7. The apparatus of any of claims 1-6, wherein:
the network interface device comprises a packet processing circuitry that is to perform the parallel evaluation as match-action operations and
the network interface device comprises one or more of: a network interface controller (NIC), a remote direct memory access (RDMA)-enabled NIC, SmartNIC, router, switch, forwarding element, infrastructure processing unit (IPU), data processing unit (DPU), or edge processing unit (EPU).

8. A method comprising:
a network interface device performing:
parallel evaluation of multiple rules for a packet by performance of match-action operations;
dropping the packet based at least in part on the parallel evaluation indicating that communication with a pod is not permitted; and
permitting communication of the packet based at least in part on the parallel evaluation indicating that communication with the pod is permitted.

9. The method of claim 8, wherein the parallel evaluation of multiple rules comprises evaluating one or more of: a permitted sender Internet Protocol (IP) address range, a permitted destination IP address range, a permitted packet protocol, or a permitted egress port range.

10. The method of any of claims 8-9, wherein the multiple rules restrict communications among Kubernetes pods.

11. The method of any of claims 8-10, comprising:
based on a match of the packet with the multiple rules, storing an action associated with the match with the multiple rules and
the network interface device applying the stored action on subsequent packets of a flow associated with the packet.

12. The method of any of claims 8-11, comprising:
generating at least one bitmap that indicates a hit or miss for particular rules of the multiple rules and
indicating that communication with the pod is permitted or not permitted based on the at least one bitmap.

13. The method of any of claims 8-12, comprising:
generating a first bitmap that indicates a hit or miss for a port range check of a first rule of the multiple rules;
generating a second bitmap that indicates a hit or miss for an Internet Protocol (IP) range check of the first rule; and
indicating that communication with the pod is permitted or not permitted based on the first and second bitmaps.

14. Machine-readable storage including machine-readable instructions, when executed, to implement a method or realize an apparatus as claimed in any preceding claim.
